# EUROPEAN PATENT APPLICATION

(11) **EP 0 820 692 A1**
(43) Date of publication of application: **28.01.1998**
(21) Application number: 97103703.1
(22) Date of filing: 06.03.1997
(51) Int. Cl.: A01G 3/053

(54) **Blade assembly for a hedge trimmer**

(30) Priority: 26.07.1996 IT VI960123
(71) Applicant: VALEX S.P.A., 36015 Schio (Vicenza) (IT)
(72) Inventor: Spillere, Antonio, 36030 - Villaverla (Vicenza) (IT)
(74) Representative: Forattini, Amelia

(57) **Abstract**

A blade assembly for a hedge trimmer includes two flat and elongated blades (2, 2') which are substantially identical and superimposed, each blade having a central portion (3, 3') with a longitudinal axis (A, A') from which transverse teeth (4, 4') having a constant longitudinal pitch (p) and sharp edges (12, 12') protrude; a device (5, 5'; 6; 7; 8) for guiding the blades at the central longitudinal portion (3, 3'); and devices (9, 9'); 10, 10') for connecting to external motor devices for making the blades perform a mutual reciprocating movement. Cutting teeth (11, 11') and engagement teeth (13, 13') are provided; the engagement teeth are elongated transversely with respect to the cutting teeth. The engagement teeth (13, 13') having, at their tips, safety expansions (15, 15') with dull edges to facilitate the entrapment of plants and protect the user. Each blade (2, 2') has, along both lateral portions, both cutting teeth (11, 11') and engagement teeth (13, 13') in alternating positions along each side. The assembly allows a larger entry section for the foliage in the cutting regions.

## Description

The present invention relates to a blade assembly for a hedge trimmer, of the type that includes two substantially identical and superimposed elongated blades which can move in a reciprocating manner with respect to each other in a longitudinal direction by means of an eccentric actuation device or the like.

There are conventional hedge trimmers having blade assemblies of the above described type, in which each blade of the pair has a central longitudinal portion from which series of cutting teeth and elongated engagement teeth protrude transversely outwards. The cutting teeth are normally formed by cutting chambers or recesses with inlet sections and a substantially constant longitudinal pitch, and the elongated engagement teeth have, at their tips, expanded portions with dull edges suitable to facilitate the entrapment of the plants and protect the user.

The blades are coupled by longitudinal guiding and coupling devices at their central portions.

Examples of these assemblies are described in DD-A-208 450, WO-A-9221521, DE-A-4 224 665, and EP-A-0 635 200.

In these conventional assemblies, the blades are identical so as to drastically reduce production costs and spare part storage costs.

Moreover, in each blade one of the active lateral portions is provided only with cutting teeth and the other lateral portion is provided only with engagement teeth.

By virtue of this arrangement, the pitch of the engagement teeth is identical to the pitch of the cutting teeth on the opposite side, and this can prevent the entry of large foliage in the cutting chambers, which would reduce the cutting efficiency.

An aim of the present invention is to eliminate the drawbacks of the prior art by providing a cutting assembly which allows easy access to the cutting region even on the part of considerably large foliage, so as to achieve high cutting efficiency.

A further aim of the invention is to provide a cutting assembly providing considerable safety and reliability.

A further object of the invention is to provide a cutting assembly which can be obtained starting from commonly commercially available raw materials so as to be advantageous from a purely economic point of view.

These and other aims which will become apparent hereinafter, are achieved by a blade assembly for hedge trimmer according to claim 1.

In particular, the blade assembly according to the invention includes: two flat and elongated blades which are substantially identical and superimposed, each blade having a central portion with a longitudinal axis from which transverse teeth having a constant longitudinal pitch protrude; a device for guiding the blades axially at the central longitudinal portion; and devices for connecting to external motor devices for making the blades perform a mutual reciprocating movement along the guiding devices; wherein the teeth include cutting teeth, with cutting edges that form cutting chambers, and engagement teeth, which are longer than the cutting teeth and are meant to cooperate with them, the engagement teeth having internal portions with cutting edges and tips with safety expansions and dull edges which are suitable to facilitate the entrapment of plants and to protect the user, and characterized in that each blade has both cutting teeth and engagement teeth along both sides.

Preferably, the engagement teeth are evenly in alternation with the cutting teeth, so that the distance between two safety expansions of two successive engagement teeth is equal to twice the longitudinal pitch of the teeth.

By virtue of this arrangement, the maximum breadth of the section for access to the cutting region that lies between adjacent engagement teeth of the moving blades is greater than the pitch of the cutting teeth and therefore facilitates the entry of foliage even if it is considerably large.

Further characteristics and advantages of the invention will become apparent from the following description of a preferred but not exclusive embodiment of a blade assembly according to the invention, illustrated with the aid of the accompanying drawings, wherein:

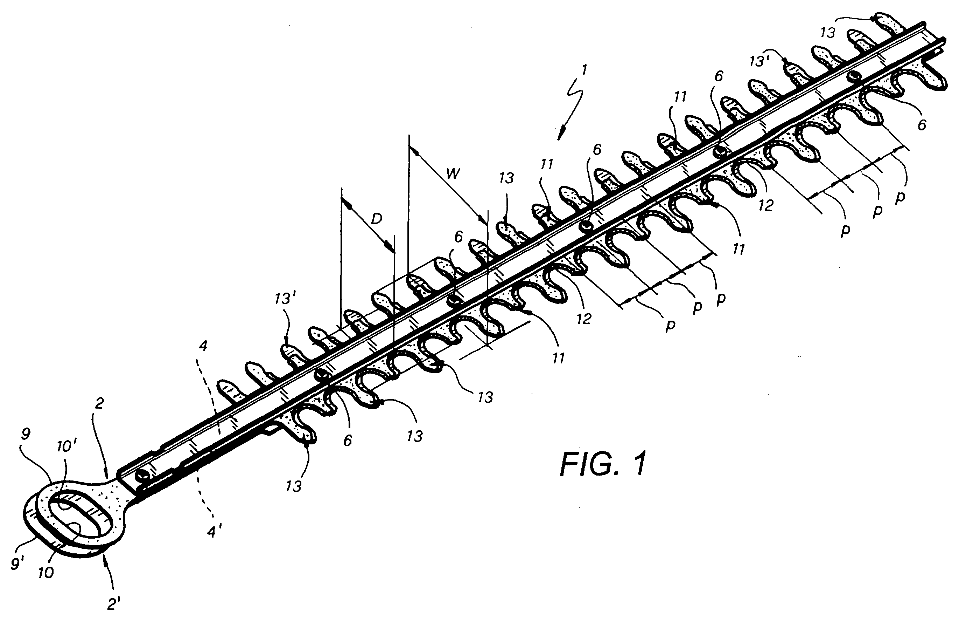

Figure 1 is a general perspective view of a cutting assembly according to the invention, with the blades arranged in a slightly staggered configuration;
Figure 2 is a plan view of the assembly of Figure 1 in a first operating position;
Figure 3 is an enlarged-scale plan view of a detail of Figure 2;
Figure 4 is a sectional view of the detail of Figure 3, taken along the plane IV-IV;
Figure 5 is a plan view of the assembly of Figure 1 in a second operating position;
Figure 6 is an enlarged-scale plan view of a detail of Figure 5;
Figure 7 is a sectional view of the detail of Figure 6, taken along the plane VII-VII;
Figure 8 is a plan view of the assembly of Figure 1 in a third operating position;
Figure 9 is an enlarged-scale plan view of a detail of Figure 8;
Figure 10 is a sectional view of the detail of Figure 9, taken along the plane X-X.

With reference to the above figures, a blade assembly according to the invention, generally designated by the reference numeral 1, is formed by an upper blade 2 and by a lower blade 2', both of which are made of metallic material and have the same elongated shape, with their corresponding faces in mutual contact along a sliding plane P.

Each one of the blades 2, 2' is constituted by a plate member body with a central longitudinal portion 3, 3' having coinciding longitudinal axes A, A'. Transverse teeth, generally designated by the reference numerals 4 and 4', protrude outward from the central longitudinal portion on opposite sides with respect to the longitudinal axes A, A', and have a constant average pitch p.

Slotted through holes 5, 5' are formed on the central longitudinal portions 3, 3' and are orientated along the axes A and A'. Guiding pins 6 are inserted in the holes and are anchored respectively to a lower plate 7 and to an upper profile 8 in order to retain and longitudinally guide the blades 2, 2'. Suitable lubricants allow the matching faces of the blades 2, 2' to slide with minimal friction along the plane P.

The end portions 9, 9' of the blades 2, 2' have respective holes 10, 10' for rotating eccentric members which are connected to an external motor device, not shown in the drawings, and which is per se known to the person skilled in the art. The motor is inserted in a body frame of a hedge trimmer, and is suitable to make the blades move reciprocatingly with respect to each other.

The teeth 4, 4' include cutting teeth 11, 11', which have a transverse length D and have cutting edges 12, 12' which form cutting chambers shaped like a circular arc covering an angle of more than 180°, and engagement teeth 13, 13', which have a transverse width W that is greater than the width D of the cutting teeth and cooperate with the cutting teeth in order to retain the foliage in the cutting chambers.

In particular, the cutting teeth 11, 11' have rounded tips 14, 14' to facilitate the entry of the foliage into the cutting regions.

The engagement teeth have edges 12, 12' which are identical to the cutting edges but have, at their tips, safety expansions 15, 15' with dull edges which have the purpose of trapping the foliage and pushing it towards the cutting chambers, at the same time protecting the user in case of involuntary contact.

In particular, the expansions 15, 15' are provided with tips which have an approximately triangular shape in plan view, with rounded outer corners 16, 16' and with a smaller radius of curvature than the rounded tips 14, 14' of the cutting teeth, and straight sides 17, 17' which are perpendicular to the longitudinal axes A, A'.

According to the invention, each blade 2, 2' has, along both sides with respect to the longitudinal axis A, A', both cutting teeth 11, 11' and engagement teeth 13, 13'.

In particular, the engagement teeth 13, 13' are arranged in alternation with the cutting teeth 11, 11', so that the distance between two safety expansions 15, 15' is equal to 2p, that is to say, twice the average pitch of the teeth.

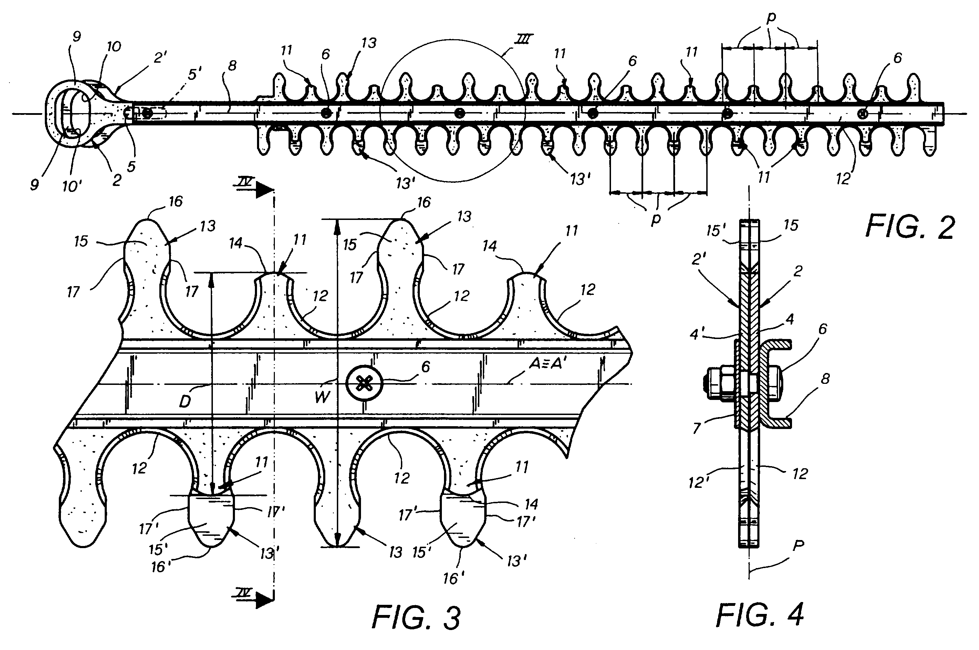

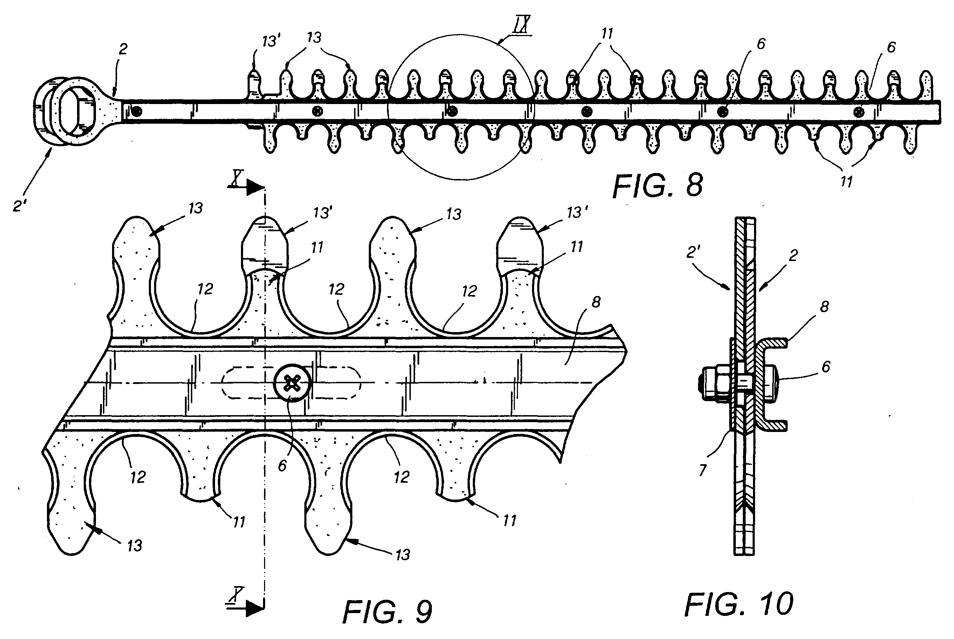

By virtue of this arrangement, the average inlet section in the cutting region, which corresponds to the distance between two successive expanded portions 15, 15' along the same side, is between a minimum value equal to p, in the condition shown in Figures 8 and 9, and a maximum value 2p, in the condition shown in Figures 2 and 3.

With respect to the blade assemblies of the past, one therefore obtains a higher average value of the inlet section in the cutting regions, allowing higher efficiency especially for cutting large foliage.

Conveniently, in order to prevent excessive vibration, the series of cutting teeth 11 arranged in alternation with the engagement teeth 13 and formed on one side with respect to the longitudinal axis A is longitudinally offset with respect to the similar series of cutting teeth 11 arranged in alternation with engagement teeth 13 formed on the opposite side with respect to the axis A.

Preferably, the longitudinal offset is equal to p/2, that is to say, half the average pitch of the set of teeth.

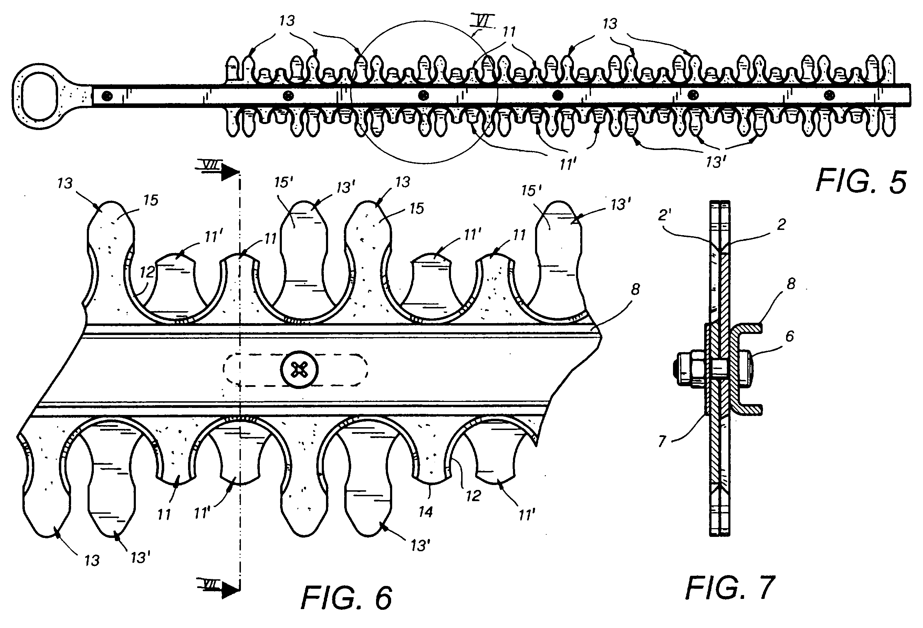

In use, the blades 2, 2' are shifted reciprocatingly along their axes A, A', which coincide so that the cutting teeth 11, 11' cooperate with each other, as shown in the situation of Figures 5 and 6, and with the engagement teeth 13, 13', as shown in the situations of Figures 2, 3 and 8, 9. The inlet sections leading into the cutting chambers are different on opposite sides and have maximum values that are equal to 2p at the stroke limits shown in Figures 2, 3 and 8, 9 and are identical on the opposite sides, with maximum values of less than 2p in the intermediate situations shown in Figures 5 and 6.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Blade assembly for hedge trimmer, comprising two flat and elongated blades (2, 2') which are substantially identical and superimposed, each blade having a central portion (3, 3') with a longitudinal axis (A, A') from which transverse teeth (4, 4') having a constant longitudinal pitch (p) and sharp edges (12, 12') protrude; a device (5, 5'; 6; 7; 8) for guiding the blades at said central longitudinal portion (3, 3'); and devices (9, 9'); 10, 10') for connecting to external motor devices for making said blades perform a mutual reciprocating movement along said guiding devices; wherein said teeth (4, 4') comprise cutting teeth (11, 11') and engagement teeth (13, 13') which are elongated transversely with respect to the cutting teeth (11, 11') and cooperate with them, said engagement teeth (13, 13') having, at their tips, safety expansions (15, 15') with dull edges which are suitable to facilitate the entrapment of plants and to protect the user, and characterized in that each blade (2, 2') has, along both opposite sides with respect to the longitudinal axis (A, A'), both cutting teeth (11, 11') and engagement teeth (13, 13') which are adjacent.

2. Cutting assembly according to claim 1, characterized in that said engagement teeth (13, 13') are arranged in alternation with said cutting teeth (11, 11') along the opposite sides of each blade.

3. Cutting assembly according to claim 2, characterized in that the distance between two safety expansions of two consecutive engagement teeth of a same blade is equal to twice (2p) the longitudinal pitch of the teeth (4, 4').

4. Cutting assembly according to claim 2, characterized in that in each blade the series of cutting teeth alternated with the engagement teeth formed on one side are longitudinally offset with respect to the series of cutting and engagement teeth formed on the opposite side.

5. Cutting assembly according to claim 4, characterized in that said longitudinal offset is approximately equal to half (p/2) the pitch of the teeth.

6. Cutting assembly according to claim 1, characterized in that said safety expansions (15, 15') have an external profile that is shaped approximately like an isosceles triangle with a rounded outer corner (16, 16').

7. Cutting assembly according to claim 4, characterized in that said safety expansions (15, 15') have sides (17, 17') which are substantially straight and perpendicular to the longitudinal axis of each blade.

8. Cutting assembly according to claim 1, characterized in that said cutting teeth (11, 11') have rounded tips (14, 14') with a radius of curvature that is larger than that of the outer corner (16, 16') of said safety expansions (15, 15').

9. Cutting assembly according to claim 1, characterized in that the cutting edges (12, 12') of adjacent teeth form cutting chambers or recesses which are shaped like a circular arc that covers an angle of more than 180°.

10. Cutting assembly according to claim 9, characterized in that said engagement teeth (13, 13') have cutting edges (12, 12') which are identical to those of the cutting teeth (11, 11') on the tips of which said safety expansions (15, 15') are formed.
